(19) Europäisches Patentamt
European Patent Office
Office européen des brevets

(11) **EP 4 152 266 A1**

(12) **EUROPEAN PATENT APPLICATION**

(43) Date of publication:
**22.03.2023 Bulletin 2023/12**

(51) International Patent Classification (IPC):
***G06T 11/00*** (2006.01)

(21) Application number: **21197144.5**

(52) Cooperative Patent Classification (CPC):
**G06T 11/006;** G06T 2211/421; G06T 2211/424

(22) Date of filing: **16.09.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventor: **KOEHLER, Thomas
5656 AE Eindhoven (NL)**

(74) Representative: **Philips Intellectual Property &
Standards
High Tech Campus 52
5656 AG Eindhoven (NL)**

(54) **DARK-FIELD AND PHASE-CONTRAST TOMOGRAPHY RECONSTRUCTION ALGORITHM**

(57)    A signal processing system (SPS) and related method for tomographic reconstruction of phase contrast or dark-field imagery. An improved weighting model is used to eliminate sensitivity gradient variations to so reduce artifacts is the reconstructed imagery. The system (SPS) is not reliant on iterative reconstruction algorithms. Instead, quicker reconstruction algorithms such as filtered backprojection can be used herein.

**FIG. 1**

EP 4 152 266 A1

**Description**

FIELD OF THE INVENTION

The invention relates to a system for tomographic reconstruction of phase contrast or dark-field imagery, to an imaging arrangement, to a related method, to a computer program element, and to a computer readable medium.

BACKGROUND OF THE INVENTION

One of the most useful tools in the medical arts is medical imaging. Medical imaging allows acquiring medical images of internal structures, organs, tissue of a patient in a non-invasive manner. This aids in diagnosis and can inform therapy strategies.

One such type of medical imaging is x-ray based. In x-ray-based imaging, the region of interest ("ROI") to be imaged is exposed to X-radiation which is then detected by a detector and can then be converted into imagery which can be displayed on a monitor for example to aid a clinician in therapy or diagnosis.

X-ray imaging includes radiography where projection imagery is acquired and displayed. Whilst this may be useful in some applications, there are limits to projection-only based imaging because of occlusion by intervening structures. For example, lung nodules image representations may vanish due to a rib being situated in the projection path.

To overcome limitations of purely projection-based imaging, tomographic imaging has been proposed. In tomographic imaging, cross sectional imagery may be obtained of the region of interest. In this type of imaging modality, a multitude of projection imagery is acquired from different directions around the ROI. The projection imagery is then computationally processed to obtain the cross-sectional imagery. Reconstruction algorithms are used for this purpose.

Traditional x-ray imaging is focused on attenuation as the main contrast mechanism. However, this has limitations for example when one wishes to image for soft tissue. To overcome the limitation of purely attenuation-based imaging, new x-ray modalities have been explored, which include phase contrast and/or dark field imaging. In both, other contrast mechanisms than attenuation are leveraged: when x-radiation interacts with matter it is not only attenuated but is also subject to small-angle scattering and refraction. The contrast mechanisms for dark field and phase contrast imaging focuses on these two types of contrast mechanisms. In other words, in dark-field imaging, image contrast is conferred by how strongly tissue causes small angle scattering and in phase contrast imaging, contrast is conferred by how much the x-ray wave is refracted. Whilst the attenuation measures for the attenuation coefficient, it is the diffusion coefficient and the index of refraction that are the quantities reconstructed for in dark field or phase contrast tomographic imaging.

Dark field, or small angle scattering, is distinguished from other larger scale scattering effects. In small angle scattering, the scattering experienced by an X-photon is small enough so that it can still be registered by the pixel that intersects the ray along which the original incoming x-ray photon travelled prior to the (small angle) scatting event.

Tomographic x-ray or phase contrast imaging may suffer at times from image artifacts. Applicant's WO 2013/171657 (referred to below as "WO'657") proposed to account for magnification effects in order to reduce artifacts.

However, despite these efforts, artifacts, in particular of the cupping type, have still been found to persist at times.

SUMMARY OF THE INVENTION

There may therefore be a need to improve phase contrast and dark field tomography.

An objective of the present invention is achieved by the subject matter of the independent claims where further embodiments are incorporated in the dependent claims. It should be noted that the following described aspect of the invention equally applies to the imaging arrangement, to the related method, to the computer program element and to the computer readable medium.

According to a first aspect of the invention there is provided a system for tomographic reconstruction of phase contrast or dark-field imagery, configured to:

receive phase contrast, PC, or dark-field, DF, projection data based on measurements along rays through an image domain, the projection data acquired in a scan operation by an imaging apparatus; and
perform a data processing operation, including a reconstruction operation, to reconstruct the PC or DF imagery in image domain, based on the projection data,
wherein the data processing operation includes a weighting, the weighting based at least on a sensitivity of a mean of measurements along the respective ray.

In embodiments, the said weight per ray depends on fan angle for the respective ray.

In embodiments, the said mean sensitivity further relates to a measurement along a ray complementary to the said ray.

In embodiments, the weight represents the mean of measurements along the ray, halfway between the two locations of the imaging apparatus's radiation source on the ray assumed in the scan operation.

In embodiments, the imaging apparatus includes at least one imaging facilitator component operable to facilitate conversion of radiation intensities detectable at a detector of the imaging apparatus into DF of PC signals as the said DF or PC projection data, wherein the image domain is located between the detector and the said at least one imaging facilitator component.

In embodiments, the imaging facilitator component is i) an interferometric grating or ii) a coded aperture structure.

In embodiments, the system implements a tomographic reconstruction algorithm of the filtered-back-projection type.

In embodiments, the system is switchable into two modes, one mode to reconstruct DF imagery and another mode to reconstruct PC imagery using the same back-projection operation. This allows a more streamlined implementation, for example with less memory consumption and more efficient maintenance.

In embodiments, the system is to further implement a further tomographic reconstruction algorithm but of the iterative type, to process the reconstructed imagery as initial data to reconstruct second DF or PC imagery. This allows boosting performance of the iterative type reconstruction algorithm.

In embodiments the system is so configured to that, in a back-projection operation, a contribution of (all) rays from radiation source positions 360° apart from each other are normalized to *1/2*.

In another aspect there is provided an imaging arrangement, comprising the said system of any of the previous claims, and the imaging apparatus.

In another aspect there is provided an arrangement, wherein the imaging apparatus is of the cone-beam type. Other imaging geometries of the parallel or fab beam type are not excluded herein. helical geometries are also envisaged.

In another aspect there is provided a method for tomographic reconstruction of phase contrast or dark-field imagery, comprising:

receiving phase contrast, PC, or dark-field, DF, projection data based on measurements along rays through an image domain, the projection data acquired in a scan operation by an imaging apparatus; and
performing a data processing operation, including a reconstruction operation, to reconstruct the PC or DF imagery in image domain, based on the projection data,
wherein the data processing operation includes a weighting, the weighting based at least on a sensitivity of a mean of measurements along the respective ray.

In another aspect there is provided a method of computing weights for use in the above weighting. The weights are computed per ray angle. For a given ray angle, the weight may be computed as the mean of measurements along the ray, halfway between the two locations of the imaging apparatus's radiation source on the ray assumed in the scan operation.

In another aspect there is provided a computer program element, which, when being executed by at least one processing unit, is adapted to cause the processing unit to perform the method.

In another aspect there is provided at least one computer readable medium having stored thereon the program element. The wights are ray angle dependent.

The projection data is preferably combined in a combination operation in order to make the projection data more isotropic for improved processing by filtered-back projection-type reconstruction algorithms. The weighting may then be applied to the so combined projection data. In the combination operation, measurements for respective sets of complementary rays are combined such as by computing a mean (such as an average) for the measurements for the set of complementary rays. The weighting compensates for the along-ray sensitivity gradient of measurements. The sensitivity is caused by the presence of the imaging facilitator structure in the X-ray beam. The sensitivity measures the different signal responses along a given ray.

The system allows for better reconstruction results with fewer or no artifacts as the system is configured to account for a certain type of anisotropy in respect of sensitivity gradients not previously addressed. Whilst combining projection data in respect of rays by computing the mean or averages removes the sensitivity gradient along the respective rays, the proposed system goes further than that. Merely combining projection data still leaves the sensitivity to vary with ray angle. The proposed system, by using the weighting, compensates for this ray angle dependent sensitivity variation, thus ensuring that the underlying modelling assumptions for filtered-back projection type reconstruction algorithms are better met. This results in reduced artifacts. The system is not reliant on iterative reconstruction algorithms, and quicker reconstruction algorithms such as filtered back-projection can be used herein.

The proposed weights can be used for axial and helical reconstructions.

The same proposed weights can be used for phase contrast and dark-field imaging. Thus, the same weighting can be applied before an appropriate filtered back-projection (FBP) algorithm with the weighting applied over a preferably 360° scan for example.

For dark-field imaging, a standard FBP as in attenuation contrast imaging can be adopted thanks to the newly proposed weights. For differential phase contrast imaging, several base methods are also available, which differ only slightly from the corresponding attenuation contrast FBP version.

The proposed system, unlike earlier iterative approaches, allows, in the reconstruction stage, reconstructing only phase contrast or only dark field imagery, one without the other, as desired. This is because, thanks to the improved weighting model, filtered back-projection type algorithms can be used for phase contrast or dark field. In contrast thereto, iterative reconstruction approaches, e.g. the so-called intensity based iterative reconstruction (IBSIR), relied on at least two-channel reconstructions where both, phase contrast and dark-field imagery, must be reconstructed alongside each other, which increased the computational burden. But in the system proposed herein, depending on the desired configuration or output, the system can be adjusted by user interface to reconstruct either for phase contrast or dark field imagery. However, this does not exclude embodiments for still reconstructing both, dark field and phase contrast imagery, in which case the converter supplies two sets of projection data, one sinogram for phase contrast, and one sinogram for the dark field signal. The conversion stage may still supply both sets of sinograms, even if only one reconstruction is desired. This is because some phase contrast/dark-field retrieval algorithms still operate intrinsically two-channel-wise. However, as the conversion stage operates in projection domain, no back-projection operation is required which still results in computational savings over two-channel iterative reconstructions algorithms.

The proposed weighting can be used in particular with interferometers in inverse geometry. Inverse geometry is cheaper to manufacture than an interferometer in direct geometry. However, use of direct geometry type interferometers are not excluded herein.

The system may be operative in projection domain or during reconstruction to apply the weighting. Specifically, in some embodiments the weighting is applied to the projection data in the data processing operation prior the reconstruction operation to obtain weighted projection data which is then reconstructed in the reconstruction operation. Alternatively, the weighting is applied during and/or in the data reconstruction operation.

BRIEF DESCRIPTION OF THE DRAWINGS

Exemplary embodiments of the invention will now be described with reference to the following drawings, which, unless stated otherwise, are not to scale, wherein:

Fig. 1 shows a schematic block diagram of a tomographic imaging arrangement configured for dark field and/or phase contrast imaging;
Fig. 2 shows an interferometer in two different geometries;
Fig. 3 shows a schematic illustration of data acquisition based on the line integral model;
Fig. 4 shows a schematic representation of a scan orbit with divergent imaging geometry;
Fig. 5 illustrates computation of a sensitivity compensating weight as envisaged herein in embodiments;
Fig. 6 shows schematic block diagram of a signal processing system for tomographic phase contrast and/or dark field imaging;
Fig. 7 details of an axial cone beam imaging geometry;
Fig. 8 details of a helical tomographic imaging geometry; and
Fig. 9 shows a flow chart of signal processing method for tomographic phase contrast and/or dark field imaging.

DETAILED DESCRIPTION OF EMBODIMENTS

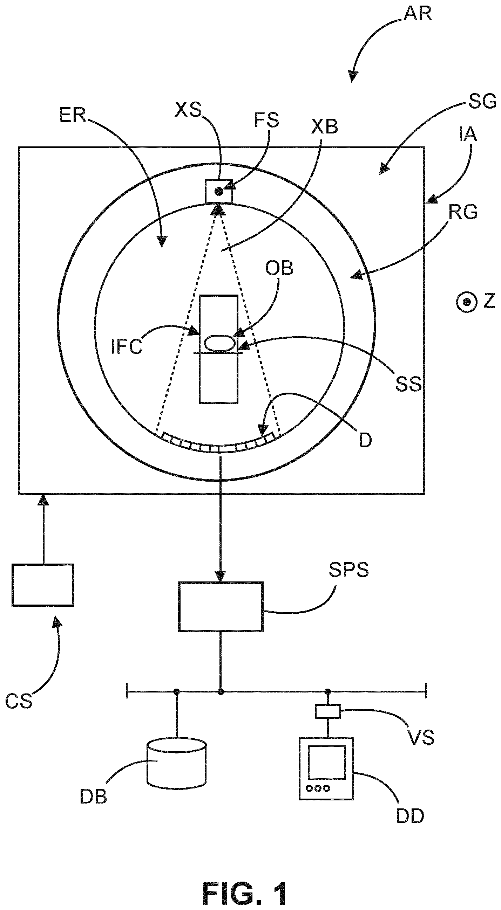

Reference is now made first to the block diagram of Fig. 1 which shows a tomographic imaging arrangement AR. The arrangement AR includes an x-ray based tomographic imaging apparatus IA (also simply referred to herein as the "imager") and a signal processing system SPS configured to process data generated by the imager IA.

Broadly, the tomographic imager IA is configured to generate projection data which is processed by the signal processing system into cross sectional dark field or phase contrast imagery of an object OB.

The cross-sectional imagery may then be stored on a database DB or other memory, or may be processed by a visualizer VS to visualize the imagery on a display device DD. This will be explored in more detail below.

The signal processing system SPS implements improved reconstruction techniques that reduces artifacts in tomographic dark field and/or phase contrast imagery. The object OB imaged herein includes in particular a human or animal patient or parts thereof to acquire cross sectional imagery of a region of interest such as an anatomy of a patient. However, the below principles are not necessarily confined to medical applications, and imaging of non-animate objects such as in non-destructive testing is also envisaged herein. However, main reference will be made in the medical realm and the "object OB" will be referred to herein as the patient if required.

The imaging apparatus includes an x-ray source XS capable of generating an x-ray beam XB. The beam comprises photons that propagate along rays that make up the beam. The x-ray beam during operation traverses an examination region ER in which the patient OB resides. The x-ray beam interacts with patient OB tissue and is modified. The modified radiation is then detected at a detector D as projection data $\lambda$. The detector D is arranged opposite the source XS with the examination region (with the object OB in it) defined in between the two.

The detector D comprises a radiation sensitive surface made up by detector sensitive pixel elements that translate radiation intensities into measurement values. The layout of the detector pixels that make up the radiation sensitive surface is either in 1D or, preferably, in 2D (matricial) layout. A data acquisition unit (DAQ - not shown) includes a A/D conversion stage that converts the readings into numbers to so obtain the projection imagery in digital form.

The projection imagery is then forwarded to the signal processing system SPS for processing as will be explained in more detail below. The tomographic imager IA also referred to herein simply as CT performs a scan operation during which the projection data A is collected. The scanning operation includes moving the focus spot FS of the x-ray source XS past the object to so acquire a series of projection imagery along different directions.

All types of CT imagers of various imaging geometries are envisaged herein. Fig. 1 shows as an example, a CT imager of the 3$^{rd}$ generation where the x-ray source including the focus spot traces out an imaging orbit $\sigma$. The orbit $\sigma$ may be one of an arch or closed line, such as a complete circle, as required. An angular coverage is preferably at least 180° but also includes full scans at 360°. The rotation axis Z of the scan orbit $\sigma$ preferably passes through the region of interest to be imaged at an iso-center IS. The imaging/rotation axis extends perpendicular into the drawing plane of the Fig. 1 representation.

The exemplary imaging geometry shown in Fig. 1 is of the divergent beam type, such as a fan or cone beam. However, other imaging geometries, such as parallel beam or others, are also envisaged herein, and so are CT imagers of the first, second or fourth generation. In third generation type, the x-ray source and the detector are arranged opposite the x-ray source across the examination region where the object resides are mounted on a rotatable gantry RG. The rotatable gantry is arranged in a stationary (that is, non-rotatable) gantry SG. The rotational gantry RG is rotatable around the rotational axis, and with it, the x-ray source and, in some types of scanners such as of 3$^{rd}$ generation, the detector D. Projection imagery is acquired during the rotation from different angle directions as mentioned. However, such a mechanical rotation of the detector is not necessarily required herein as in fourth generation scanner where there is a stationary detector ring arranged around the examination region. In addition, a mechanical motion of the x-ray sources shown in Fig. 1 and all known generations are also not required herein as in fifth CT scanners also envisaged herein, where the scan orbit $\sigma$ is achieved by magnetic deflection of an electron beam so as to trace out the orbit $\sigma$. The electron beam is generated by an electron gun of the x-ray source XS.

The examination region ER may be formed as a bore in the gantries SG, RG. The imager may thus have an, in general, overall annular ("donut"-shaped) appearance as shown in frontal view of Fig. 1. The examination region ER is the space between the x-ray source and the detector in which the imaged object OB resides. The object OB may be supported in the examination region during imaging by a support surface SS. Scan orbit $\sigma$ is not necessarily confined to a single plane per rotation, as helical orbits are also envisaged herein. In helical imaging geometries, there is a relative lateral motion between source and object induced along the imaging axis Z. This may be done for example by advancing the patient support SS, with patient OB on it, through the imager's bore whilst the focal spot traces out its (e.g. circular) orbit. Instead, the stationary gantry SG may be laterally moved. Motion of the rotatably gantry (if any) and/or of support surface SS may be effected by actuators (e.g., electric motors, etc). Control of imaging operation, such as setting of imaging parameters (tube current/voltage, etc.) and controlling the said actuators is from a user operable console CS.

The tomographic imager IA is configured for dark field and/or phase contrast imaging. This configuration can be achieved by arranging in the examination region not only the imaged object OB, but in addition, at the same time, an imaging facilitator component IFC as schematically shown in Fig. 1. In embodiments, but not necessarily in all embodiments, the imaging facilitator component IFC (for brevity referred to herein as the "imaging facilitator IFC") includes an interferometer. The interferometer may comprise at least one, two, or at times, three gratings G0-G2. Principles of grating-based phase contrast or dark field imaging has been described previously elsewhere and will be described in more detail below.

Detector systems D as used in most imaging systems are only capable of responding to the intensity of the impinging x-radiation. In some detector setups, phase contrast and dark field contrast may not be recorded natively as such but rely on computational processing of data obtainable by operation of the imaging facilitator IFC. Specifically, a function of the imaging facilitator IFC is to facilitate translating detected intensities into data that represents, or are convertible into, dark field and/or phase contrast projection data $\lambda_\varepsilon$, $\lambda_\delta$. Thus, the dark field and/or phase contrast projection data $\lambda_\varepsilon$, $\lambda_\delta$ captures contributions of small angle scatter and refraction of the radiation wave front, respectively. A generic reference of "$\lambda$" and cognates (such as $\lambda'$, $\tilde{\lambda}$, etc) should be construed herein as reference to either dark field and/or phase contrast projection data $\lambda_\varepsilon$, $\lambda_\delta$, or related data derived therefrom. Whilst grating-based phase contrast and dark field imaging is mainly envisaged herein, this is not at the exclusion of other types of imaging facilitators IFC, such as coded aperture plates, structured masks, crystals, or others still, each such other type being envisaged herein in embodiments. The imaging facilitator structure comprises least partially radiation blocking structures with periodic or non-periodic sub-structures, that interact with the imaging X-ray beam to realize different intensity measurements that can be computationally processed as will be explained in more detail below. Coded aperture techniques were described by A Olivo et al in "A coded-aperture technique allowing x-ray phase contrast imaging with conventional sources", Applied Physics Letters, vol 91, p 074106 (2007).

Broadly, the imaging facilitator IFC, such as the one or more gratings G0-G2, is used as follows. The incoming x-radiation received from the X-ray source XS interacts with the patient's tissue and the image facilitator IFC to cause a fringe pattern to be detected at the detector. The detector may be of the 1D type, such as a single row of detector pixels, but is preferably of the 2D type, thus includes plural detector pixels arranged in a matrix layout in rows and columns.

The fringe pattern has been found to encode the dark field and/or phase contrast contributions. For example, an amplitude or loss of visibility of the fringe pattern is known to encode the dark field signal, whilst a phase shift of the fringe pattern has been found to relate to the phase contrast contribution. Reference data including a reference visibility and phase, respectively, as used. The recorded fringe pattern is computationally processed by a phase contrast or dark field retrieval algorithm to produce the dark field or phase contrast projection data. In other words, for any given angular direction $\alpha_0$ of acquisition ray, there corresponds respective dark field and/or phase contrast projection data. The respective projection data for all angular directions forms the collection of all dark field and/or phase contrast projection data $\lambda_\varepsilon$, $\lambda_\sigma$, also referred to herein as the dark-field or phase contrast sinogram, respectively.

The phase retrieval or dark field retrieval is applied to each projection direction to so acquire a complete set of dark field or phase contrast projection data $\lambda_d$, $\lambda_p$. Some such described retrieval algorithms required earlier a dedicated phase stepping operation in which a grating, at least parts of the imaging facilitator in general, is latterly (relative to the beam XB) displaced. Whilst such an explicit phase stepping is not excluded herein in the CT applications, it is less preferred as it will slow down image acquisition and may be cumbersome to implement mechanically. Instead of performing an explicit phase stepping, signals detected at neighboring pixels along neighboring angular directions $\alpha_{j,j=-N,\cdots,-1}$, $\alpha_{k,k=1\ldots N}$, preferably centered around a current direction $\alpha_0$, are processed and used instead as a substitute for an explicit phase stepping to so capture for each projection direction ao a good approximation of the respective fringe pattern. Phase and visibility loss of the respective fringe pattern is then extracted as mentioned above, by any one of suitable retrieval algorithms. Such algorithms are sometimes called phase retrieval algorithms, although this is a misnomer as it is also the dark field signal that is likewise retrieved in such operation. Fourier based techniques may be used to process the fringe pattern and to so isolate and extract therefrom the dark-field and/or phase contrast contribution. Some such retrieval algorithms retrieve both, dark-field and phase contrast contributions, whilst others retrieve only one contribution, dark-field or phase contrast, as needed. Suitable phase retrieval/dark-field retrieval algorithms were described elsewhere, for example by F Pfeiffer et al in "X-ray dark-field and phase-contrast imaging using a grating interferometer", JOURNAL OF APPLIED PHYSICS, vol 105, 102006 (2009) or by I Zanette et al. in "Tri-modal low-dose X-ray tomography, PNAS, vol 109 (26), pp 10199-10204, (2012).

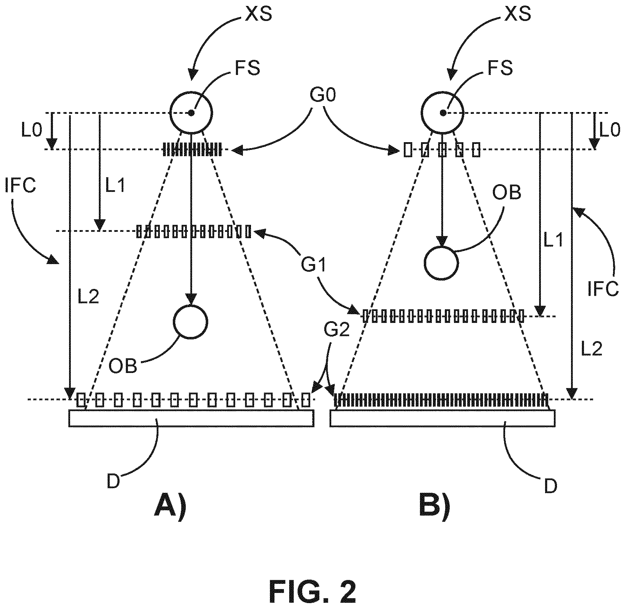

Reference is now made to the schematic drawings of Figs. 2 A,B which show in more detail an imaging facilitator structure IFC of the grating-interferometer type, as envisaged herein in embodiments.

Specifically, a Talbot-Lau interferometer may be used in different geometries, either in inverse geometry as shown in Fig. 2A or in direct geometry as shown in Fig. 2B. The interferometer may comprise two gratings G1 (sometimes referred to a phase grating) and G2 (sometimes referred to as analyzer grating). Preferably G2 is an absorber grating and G1 is a phase or absorber grating. Grating G2 may be integrated into to the detector D.

Interferometric setups for tomography phase contrast and dark-field imaging were described by M von Teuffenbach et al in "Grating-based phase-contrast and dark-field computed tomography: a single-shot method", Sci Rep 7, 7476, (2017).

In direct geometry, Fig. 2B, the two gratings G1,G2 are arranged downstream the examination region (in particular of the object OB), so that, during projection data acquisition, the two gratings are situated between the object and the detector D. The examination region in this direct geometry arrangement is then between X-ray source and the grating pack formed by the two gratings G1 and G2.

In inverse geometry, Fig. 2A, the examination region/imaged object OB is between the phase G1 and analyzer G2 grating.

As shown in Figs. 2A,B, the pitches of at least the G0,G2 gratings are different in the two different geometries.

In case the X-ray radiation supplied by source XS is incoherent, there is a further absorber grating, referred to as the source grating G0, arranged between focal spot FS of XR source and the object OB to increase the coherence of the emitted radiation. If the X-radiation generated by source G0 is natively coherent, no source grating G0 is required.

The distance between G0 and G1 and between G1 and G2 are specifically adjusted according to the Talbot-Lau set up that has been described elsewhere. The distances between G0 and G1 and between G1 and G2 must be finely tuned to fit the requirements of Talbot distance of suitable order, which in turn is a function of the "pitch" (that is, the spatial period of the grating rulings) of the respective grating, and the mean energy of the X-radiation generated by source XS.

The gratings may be manufactured by photolithography or by cutting in silicon wafers to define the periodic pattern of trenches. For the absorption gratings, interspaces between the trenches may be filled with lead, gold or other high-Z material.

The distances *L0, L1 and L2* as shown in Figs. 2A,B represent the source, phase and analyzer grating distances, respectively. Preferably, as defined herein, the distances *L0, L1, L2* are measured from the focal spot. Other interferometers, not necessarily of the Talbot-Lau type are also envisaged herein, and this disclosure is not confined to Talbot-Lau type interferometers, or indeed to interferometers in general, as mentioned before.

Phase contrast and/or dark field tomographic imaging has been found in the past to be beset by various imaging artifacts, such as cupping type artifacts and others. Applicant's WO'657 has discovered that magnification effects account for some of those artifacts. It has been found that the imaging signal may be magnified depending on where the respective image point in image domain is located relative to the gratings, or relative to the imaging facilitator structure IFC more generally.

Another effect, distinct from magnification, has been observed as certain non-uniform measurement sensitivity s. Whilst magnification is purely a geometric effect that spreads out the image signal over a larger width across neighboring pixels, sensitivity s is not a geometrical effect, but is a physical effect. (Measurement) sensitivity s describes different signal strengths caused by an imaginary test object that moves in image domain along an imaging ray *L*. At some image points there is a higher signal strength than at others along the same ray. The sensitivity *s* is a function of distance, along the ray *L,* of the image point to the imaging facilitator IFC. It appears, that the mere presence of the image facilitator IFC in the ray induces a sensitivity gradient along the ray.

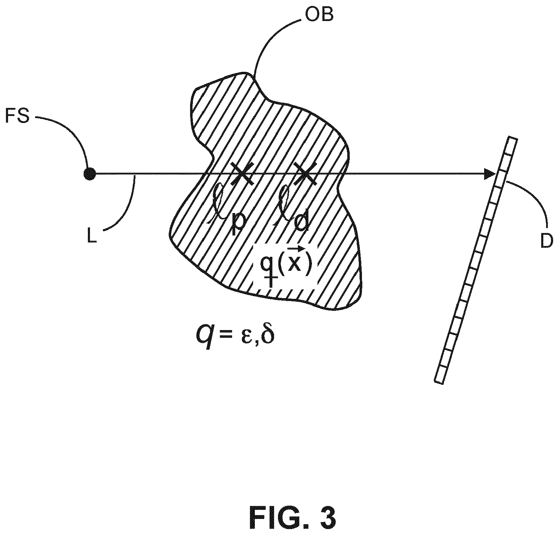

In more detail, the tomographic measurement collection operation is schematically shown in Fig. 3. Detector D comprises detector pixels that detect a respective measurement *m*. The measurement *m* can be modelled as line integrals of the quantity of interest *q* along ray *L* that intersects the detector at a given pixel, where the measurement is made:

$$m_\varepsilon = \int_0^L s(l)\varepsilon(\vec{a} + l\vec{n})\,dl \qquad (1a)$$

$$m_\sigma = \partial_x \int_0^L s(l)\sigma(\vec{a} + l\vec{n})\,dl \qquad (1b)$$

Eq(1b) is the forward model for the refractive index decrement $\sigma$ and eq(1a) is the forward model for the linear diffusion coefficient $\varepsilon$. Operator $\partial_x$ refers to the derivative taken perpendicular to the grating trenches. *L* is the measurement ray along direction $\vec{n}$ (not shown in Fig.3), and $\vec{a}$ is the source XS position on scan orbit $\sigma$. Thus, the quantity of interest q (either $\varepsilon$ or $\sigma$) in Fig. 3 whose spatial distribution in image domain is to be reconstructed is either the gradient of the refractive decrement $\sigma$ (phase contrast signal) or the linear diffusion coefficient $\varepsilon$ (dark field signal), whichever is of interest herein. Line integrals (1a,b) is a basic forward model as may be used in reconstruction algorithms, in particular filtered back-projection algorithm. s(*l*) represents the measurement sensitivity, which will now be explained in more detail.

A certain pixel at detector D records the line integral of measurements collected along ray L. The ray extends from the focal spot FS at a given position on the orbit $\sigma$ through the image object OB in image domain, to the respective detector pixel. Conceptually, the image domain ER in which object OB resides (and thus the object OB itself) can be thought of being made up of image points, also referred to as voxels.

Measurements collected at different image points in image domain along the ray *L* have been found to produce different contributions at different strengths in respect to measurement *m* as detected at detector D. More particularly, consider two different image points on a given ray *L*, one proximal $l_p$ the other $l_d$ distal to the source XS. A test object, such as s diffuser or refractor, placed at each of $l_d$ , $l_p$ will produce signals at different respective strengths. Thus, the measurement sensitivity *s*, or signal strength, varies along the ray with distance to imaging facilitator IFC.

The spatial along-ray dependency may be modelled as a ramp function over distance between G1 and G2 or between G0 and G1, depending on whether inverse (Fig. 2A), or direct (Fig. 2B) geometry is used. The along-ray sensitivity dependence differs for direct and inverse geometry. The ramp function for signal strength or sensitivity s and their dependence on distance from imaging facilitator structure has been described by Donath et al in "Inverse geometry for grating-based x-ray phase-contrast imaging", JOURNAL OF APPLIED PHYSICS 106, 054703, (2009).

The sensitivity s may be defined as $s(l) = \frac{l - L_0}{L_1 - L_0}$ for direct geometry and $s(l) = \frac{L_2 - l}{L_2 - L_1}$ for inverse geometry.

It is proposed herein to use an improved weighting in the reconstruction of the cross-sectional dark field or phase contrast imagery that accounts with better accuracy for the along-ray sensitivity experienced by the imaginary sample test object as it is moved along that ray L. In addition, the sensitivity varies with ray angle, and this variation is also accounted for with the improved weighting. A high-fidelity weighting model is thus proposed herein that allows reducing artifacts in reconstructed phase contrast and/or dark-field imagery that are at least partly caused by the sensitivity gradient. As briefly mentioned earlier, this along-ray measurement sensitivity gradient is different from, and in addition to, any magnification effect that may occur due to divergent beam geometries for example. Specifically, the sensitivity effect does not usually mean that the signal spreads over multiple pixels as may be the case for magnification for example. As the described measurement sensitivity is a per detector pixel phenomenon, there is a corresponding sensitivity effect on the fringe pattern that is detected during acquisition at the detector D.

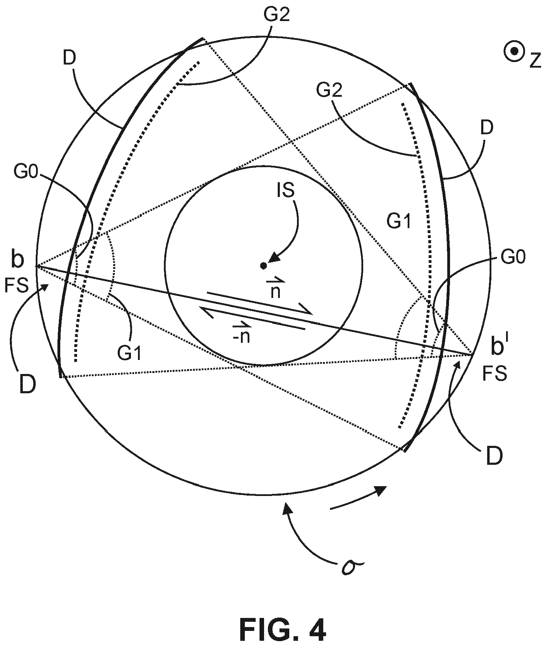

Before explaining the improved weighting model in more detail, reference is first made to Fig. 4 which describes the concept of complementary measurements in tomographic sinograms and a related anisotropy.

Specifically, Fig. 4 affords a view along the imaging axis Z of a CT imaging geometry with divergent beam geometry such of the fan angle or cone beam type. The system fan angle describes the spread of the beam used for each exposure. Two complementary positions of the focal spot on the scan orbit $\sigma$ are shown at angular position $\beta$ and $\beta'$. Scan orbits $\sigma$ that cover a sufficient angular range such as those of at 180° give rise to the concept of complimentary measurements $m, m'$ along different rays. Measurements (and their rays) are complementary if they are collected along two different rays that issue forth from different locations of the focal spot on the orbit $\sigma$, and if the two locations are defined by the two intersections of a line that intersects the orbit. Two complementary rays $\vec{n}$ and $-\vec{n}$ are shown for the two example locations $\beta$, $\beta'$ in Fig. 4. In particular for divergent beam geometries as shown in Fig. 4, for an exemplary ray that does not pass through the iso-center IS, it can be seen that the two focal spot positions, and their opposite detector pixel locations, are not fully symmetric due to a discrepancy $\Delta$ caused by detector pixels not being located on the source path. This give rise to an anisotropy of the data acquisition setup as two different line integral measurements $m, m'$ are detected for the two complementary rays. However, in filtered back projection ("FBP") algorithms for reconstruction as mainly envisaged herein, there is an assumption of isotropy in respect of measurements for complementary rays: according to the line integral based modelling assumption of FBP, the measurements $m, m'$ for complementary rays should be the same. More generally, a modelling assumption in FBP is that there is constant sensitivity along the ray which is also independent of the fan angle of the ray. As one or both those assumptions have been found not to be true in general, a transformation from this anisotropic setup into a fully isotropic setup is proposed where there is such uniform and constant sensitivity. Such a setup may be useful, as otherwise artifacts may be incurred if the FBP reconstruction is run on the phase contrast or dark field sinogram as is. The transformation may be accomplished by a combination operation in which measurement data in the sinogram for complementary rays are respectively combined into new data, and a compensation operation using specially configured weighs $c$ as will be explained in more detail below.

Conceptually, complementary rays are divided into equivalence classes, and to each equivalence class is assigned the respectively combined measurements from the original sinogram, either the phase contrast or dark-field sinogram. A new sinogram, referred to herein as the combined sinogram (generally referred to herein as $\lambda_\varepsilon'$, $\lambda_\sigma'$, may be obtained in this manner. For example, as shown in Fig. 4, measurements along complementary rays $\vec{n}$ and $-\vec{n}$ can be averaged or otherwise consolidated into a single measurement. For example, the arithmetic mean of the two measurements $m, m'$ may be formed. Other combiner operations, such as weighted means or others still, not necessarily mean based, are also envisaged herein. Each set of rays that are complementary is thus assigned a single combined measurement such as the mean. This is done for each set of complementary rays to so obtain the combined dark-field or phase contrast sinogram. By definition, the so combined sinogram $\lambda_\varepsilon'$, $\lambda_\sigma'$ is at least partially isotropic, as opposed to the original anisotropic sinogram, because the on-ray variation of sensitivity s is eliminated or reduced. The proposed setup goes further than this at it relates to a virtual measurement model with fully isotropy, where the forward model does not only not have a sensitivity variation along the rays $L,R$, but one where the sensitivity is in addition the same for all rays.

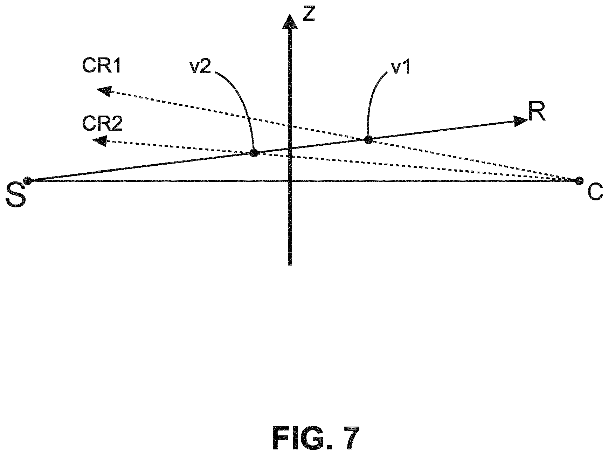

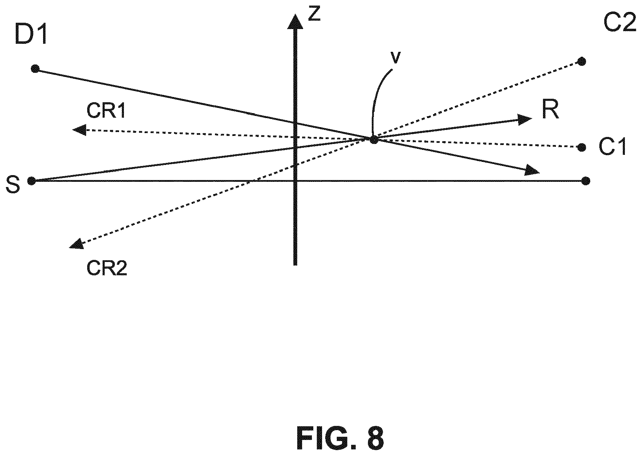

Thus, in diverging beam geometries and similar as used herein, the projection sinograms may be combined such as averaged. The combined, e.g. averaged, value has been found to depend on the respective ray angle or fan angle (to be distinguished from the system fan angle), which is the direction defined by the location of the focal spot and the inclination of the individual rays that emanates from the focal spot position. In the fan beam setup each set up complementary ray comprises two rays $\vec{n}$ and $-\vec{n}$, but this not necessarily so in more complex imaging geometries, where there may be more than two such rays for each class of complementary rays. In helical scan orbits, the set of complementary rays may be defined in terms of planes that are perpendicular to the rotation/imaging axis. Specifically, for helical paths or similar, the above-described definition for complementary measurements do not necessarily require that the complimentary rays $\vec{n}$, $-\vec{n}$ are coinciding on the same geometrical line as described above in Fig. 3. In helical paths, rays are considered complementary if they lie in the same plane, and this plane is parallel to the rotation axis. In particular, in helical orbits, rays may be complementary even if they do not coincide on the same geometrical line. It will be noted that the above-described combination operation in which (complementary) measurements along complementary rays are combined to establish constant sensitivity along the ray holds true and applies for any imaging geometry, in which case the conditions for at least partial isotropy can be expressed in terms of the more general normalization conditions eq (6) as discussed below in at Figs. 7,8.

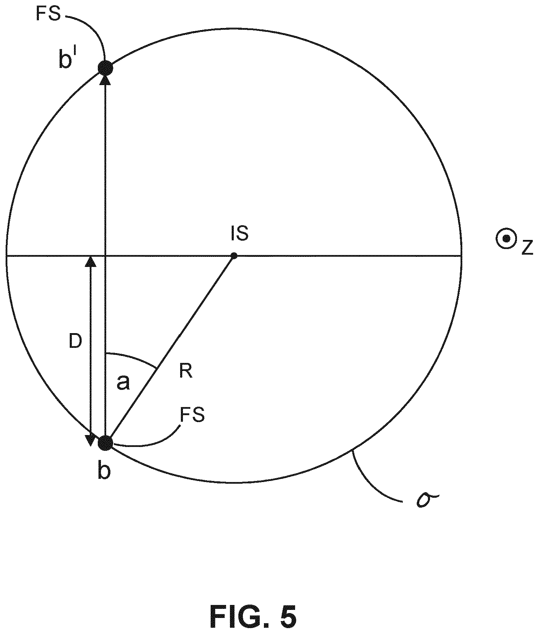

The ray angle $\alpha$ is illustrated in Fig. 5. The ray angle may be measured relative to central ray R of the fan beam.

The central ray R extends from source position on orbit to the rotation axis Z. Fig. 5 again shows a view along the said imaging/rotation axis Z, through the iso-center IS, with scan orbit $\sigma$. The combination operation, such as averaging, as described above is configured to eliminate the sensitivity variation along the ray. However, this still leaves in in general an undesired variation of the sensitivity with the ray angle $\alpha$. In order to compensate for this variation, a respective weight $c(\alpha)$ for combined complementary measurements for a given angle $\alpha$ is computed. For example, as shown in Fig. 5, the sensitivity compensating weight $c(\alpha)$ may be computed as a mean, of complementary and direct measurements. Specifically, and as shown in Fig. 5, the weight $c(\alpha)$ may be computed half-way along the given ray L. This can be computed by using the cosine of the ray's angle $\alpha$. Thus, the weight $c(\alpha)$ as proposed herein is a purely geometric quantity, based on the imaging geometry at hand.

Specifically, it appears that the average/mean or other suitable combination of the measurements of direct and the complementary ray does not suffer from the sensitivity gradient as the sum of the sensitivities along the direct and complementary ray is a constant. The value of this constant depends on the ray angle $\alpha$. The value of the constant may be computed, for example by calculation of the value of $s(l)$ half-way (see Fig. 5) from the actual source position to the complementary source position:

$$c(\alpha) = s(L(\alpha)) = s(R \cos \alpha) \qquad (2)$$

Thus, for inverse geometry the weights c($\alpha$) may be computed as:

$$c(\alpha) = \frac{L_2 - R \cos \alpha}{L_2 - L_1} \qquad (3)$$

For direct geometry, the weight c($\alpha$) may be computed as:

$$c(\alpha) = \frac{R \cos \alpha - L_0}{L_1 - L_0} \qquad (4)$$

The computed weights will differ and are dependent on the ray's angle $\alpha$. Therefore, a range of such weights can be preferably computed, one each $\alpha$. The weights are applied to the combined, for example averaged, sinogram. For example, in embodiments, the measurement values as computed for the combined dark field or phase contrast sinogram are divided by the weight c($\alpha$), with pointwise application of c($\alpha$) to the combined measurement for the respective, corresponding, angle $\alpha$.

In other words, denoting the combined phase contrast and dark field data by $\lambda_\varepsilon'$, $\lambda_\sigma'$, the improved weighting model may be configured as:

$$\overline{\lambda_\varepsilon'}(\beta, \alpha) = \frac{1}{c(\alpha)} \lambda_\varepsilon'(\beta, \alpha) \qquad (5a)$$

$$\bar{\lambda_\sigma'}(\beta, \alpha) = \frac{1}{c(\alpha)} \lambda_\sigma'(\beta, \alpha) \qquad (5b)$$

with the c($\alpha$)'s the proposed sensitivity compensating weights $c(\alpha)$. The $\beta$'s are as before the source position on the orbit. With the newly proposed sensitivity and ray angle $\alpha$ dependent weights $c(\alpha)$, in particular cupping artifacts in reconstructed phase contrast or dark-field tomographic imagery can be reduced. Thus, the weights $c(\alpha)$ account for the sensitivity of the combined measurements. Specifically, and in some embodiments, the weights capture the sensitivity of the mean measurements in the combined sinogram $\lambda'$ per ray angle. The determination of combined measurements allow compensating for the along-ray sensitivity gradients. This compensation reduces artefacts in the reconstructed imagery. The weighting with $c(\alpha)$ may also be understood as an improved forward model, in which the ray angle dependency of sensitivity $s$ is eliminated.

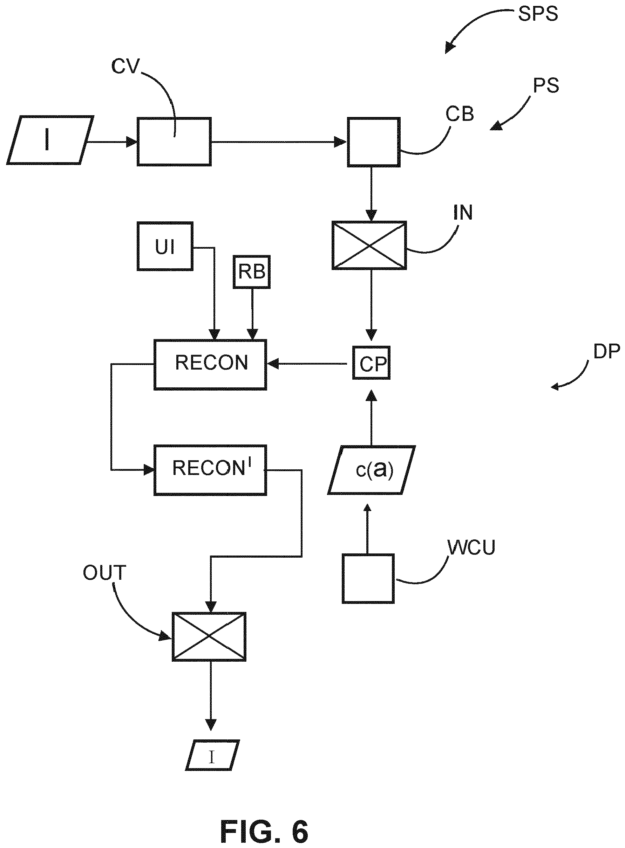

Reference is now made to Fig. 6 which shows a block diagram of the newly proposed signal proposed system SPS. The signal processing section SPS operates as a transformation stage to transform its projection imagery as recorded in projection domain at the detector into image value in image domain in the examination region compute the cross-sectional imagery. The imaging domain, that is the examination region, can be thought of made up of an imaginary grid of the earlier mentioned voxels, and the reconstruction operation computes image values for each of these voxel/grid positions.

The signal processing system may include a pre-processing stage PS, which operates in projection domain and data processing stage DP that implements the transformation from projection domain into image domain. It is at this stage that a reconstruction algorithm is used, preferably of the analytic, direct type, such as filtered back-projection FBP. FBP type reconstruction algorithms and similar can be implemented directly, for example by using Fourier-based methods, as opposed to algebraic or iterative reconstruction methods that use a discretized version of the system matrix. The system matrix is an explicit description of the contribution of the voxel *l* in image domain to a ray measurement *m*. Also, iterative type reconstruction algorithms, as the name suggest, proceed in iterations, whereas analytic, direct type reconstruction algorithms, such as filtered back projection can directly compute the cross-sectional imagery without iteration. Iterative type reconstruction algorithms are not excluded herein and can be used in combination with analytic type direct reconstruction such as FBP, as will be explained in more detail below.

Turning now first to the pre-processing section PS, intensity-based projection data as per an original sinogram including the fringe pattern thanks to operation of imaging facilitator IFC is received and passed to a conversion stage CV. Conversion stage CV processes the fringe patterns and converts the intensity projection imagery into dark field and/or dark phase projection data (phase contrast or dark-field sinogram). As explained earlier, at this stage, phase retrieval/dark field retrieval algorithms may be used. The conversion stage may be optional if the data acquisition setup allows natively acquiring phase contrast or dark-field projection data.

Dark field or phase contrast projection data may then be processed by a combiner component CB to establish at least partial data isotropy with respect to complementary rays, to that there is constant sensitivity along each ray. The combiner component CB may combine the projection data per fan angle by computing for example a mean or other average in respect to complementary measurements. For example, if *m* represents a direct measurement and m' the complementary measurement for angle $\alpha$, the combined projection data for this angle may be computed as $(m+m')/2$. Other manners of combination may be contemplated instead. The combined, for example averaged, projection data/sinogram for the dark field or phase contrast signal is then passed on to compensator DP.

Sensitivity gradient compensator CP processes the combined projection data by applying the compensatory weights $c(\alpha)$, in dependence on ray angle $\alpha$. For example, the combined projection data may be divided point-wise by the respective weights $c(\alpha)$ depending on ray angle $\alpha$. The weights may be computed by a weight computing unit WCU based on imaging geometry as per any one of eqs (2)-(4). The compensator CP compensates for the variation of the respective constant with ray angle $\alpha$, thus achieving fully isotropy.

The so weighted combined projection data is then passed on via input IN to the data processing stage DP. A reconstructor RECON of data processing stage DP implements a preferably analytic tomographic reconstruction algorithm, such as of the FBP type. The FBP type algorithm may be implemented as a two-step operation that includes a filtering step where the weighted projection data $\tilde{\lambda}$ is filtered using a filter. This, first step, results in filtered data which then back-projected in the second step. In the second step, the back-projection operation, the filtered contributions are projected "back", from projection domain, into image domain, to populate the image domain grid. Application of the FBP algorithm results is cross-sectional imagery *l* which is output at output OUT. The imagery *l* may then be stored, displayed or otherwise processed as described above.

Some application scenarios are as follow. For example, in types of axial reconstruction, preferably full (360°) scan data $\lambda$ is acquired. This is combined by combiner CB to obtain $\lambda'$. The compensator CP then divides the combined data by the weights as per eqs (5a,b) by $c(\alpha)$.

It should be noted that the order of operation of the compensator CP and the combiner CB can be exchanged. Specifically, it is envisaged to first apply compensator CP and then combiner CB or vice versa. While the order of operation does not matter in practice for 2D reconstruction, it is preferred in cone-beam geometry to apply the compensator CP first and the combiner CB later. The reason is that the selection of the appropriate complementary ray to combine with depends on the specific given voxel to be reconstructed. In addition, the combiner operation is preferably applied during reconstruction, and not as a pre-processing upstream of the reconstruction operation.

In cone beam geometries, the FDK reconstruction may be applied for dark field CT. The FDK algorithm is an FBP-type reconstruction algorithm, described by L. A. Feldkamp et al in "Practical cone-beam algorithm", Journal of the Optical Society of America A, vol. 1, no. 6, pp. 612-619, (1984). A modified FDK-type reconstruction algorithm may be used for phase contrast CT, such as described by Z Qi and G Chen in "Direct Fan-Beam Reconstruction Algorithm via Filtered Backprojection for Differential Phase-Contrast Computed Tomography", Hindawi Publishing Corporation, X-Ray Optics and Instrumentation, Volume 2008, Article ID 835172, 8 pages. The FDK algorithm may be used for a planar or other detector geometry by using appropriate filtering.

The operation of the combiner CB for a cone-beam axial trajectory and corresponding reconstruction is illustrated in Fig. 7. Specifically, Fig. 7 illustrates ray R emanating from source position S to be back-projected. Two exemplary voxels v1 and v2 are shown. There is a multitude of rays emanating from the complementary source position C, which are all in the same plane that contains the ray R. The plane is parallel to the rotation axis Z. For reconstruction operation, for each voxel, those rays from the multitude of rays are selected that pass through the voxel of interest. For example, the complementary ray for ray R and voxel v1 is ray CR1, whilst for the voxel v2, ray CR2 is complementary relative to R. In other words, in cone-beam, complementarity is dependent on the voxel position on a given ray. Different voxels on the same ray define different complementary rays. Thus, it is preferably in cone-beam or other similar geometries, to preform data combination during reconstruction rather than as a pre-processing step prior to reconstruction.

The operation of the combiner CB for a helical trajectory and corresponding reconstruction is illustrated in Fig. 8. Two source positions D1, S are shown, along with complementary positions C1 and C2 for complementary rays CR1, CR2 relative to ray R as in Fig. 7.

A common aspect of the preferred operation of the combiner in both axial and helical cone-beam CT is that a so-called 360° normalization is applied. This concept was introduced in a different context for high resolution helical CT in Shechter et al. in "High-Resolution Images of Cone Beam Collimated CT Scans", IEEE Transactions on Nuclear Science 52(1), vol 247 (2005). The basic concept is to apply a special normalization during back-projection. For dose efficiency reasons, one principle for cone-beam FBP is that for the reconstruction of a certain voxel V, all projections which represent a ray that passes through that voxel V should be considered, and that the manner in with the rays contribute to the given voxel V are preferably normalized to unity. This normalization accounts for imaging events that the given voxel V might have been "seen" more often from some projection direction(s) than from other(s).

In the general case, when performing the back-projection of a ray R from source position S, there are some complementary rays $CR_i$, $i=1, ..., N_C$, to consider. Furthermore, there are some redundant direct rays $DR_i$, $i=1, ..., N_D$, to consider. In such a case, the combiner unit CB may be configured to perform the combination operation of all these rays during back-projection by a normalizing that ensures that the normalizing weight $w_0$ for the ray R, and the normalizing weights $w_i$, $i=1, ..., N_D$ for the direct rays as well as the normalizing weights $v_i$, $i=1, ..., Nc$, for the complementary rays fulfill the condition:

$$\sum_{i=0}^{N_D} w_i - \sum_{i=1}^{N_C} v_i - 0.5 \qquad (6)$$

Note that in the 2D cases mainly described above, there is only one complementary ray, $N_C =1$, and there are no further direct redundant rays, that is $N_D=0$. Thus, the above normalization condition (6) reduces to an operation of the combiner CB with $w_0= v_1=0.5$. Thus. in this embodiment, there is just an averaging of the two rays as described in previous embodiments.

The complete cone-beam FBP reconstruction of a voxel *V* might be formulated as follows:

$$V = BP_{CB}(F(CP(c(\alpha),\lambda))) \qquad (7)$$

where $(CP(c(\alpha),\lambda)$ describes the operation of the compensator CP on the data using the values $c(\alpha)$, $F(\cdot)$ is the usual filter operation in any FBP algorithm, and $BP_{CB}(\cdot)$ is the back-projection operation that includes the combiner CB by ensuring that the normalizing weights of rays meet the normalization condition (6).

In both helical and axial CT, it is desired to acquire data such that each voxel to be reconstructed is in the cone over at least 360° in order to facilitate the normalizing of complementary rays. Thus, the projection data is preferably acquired data with low pitch (<1) in helical CT and using at least a full scan in to so ensure that all voxels are in the cone over at least 360°.

As described the above reconstruction operation by processor DP can be applied to either the phase contrast projection data or the dark field projection data as required, whichever modality is more useful for the clinical user at any given time. With the proposed method, there is no need to reconstruct both, the phase contrast and dark field imagery projection data. A user interface UI may thus be provided that allows the user to choose whether they wish to reconstruct for phase contrast or dark field imagery, or indeed for both if required and if latency is of lesser concern.

Whilst the forward model may slightly differ for phase contrast or dark field image channel, it is a token of the proposed computation efficiency of the proposed system that the very same back projection operation may be used in either case for dark field or phase contrast reconstruction algorithm.

The above principles are applicable to parallel beam geometries as well as to divergent beam geometries such as fan beam or cone beam. Fan beam geometries can be reduced to do parallel beam geometries by resorting (also known as a re-binning operation) the projection data in which case the above-described pre-processing chain PS in projection domain may include a re-binner RB.

Unlike previous approaches that focused solely on magnification compensation as WO'657, the proposed system can be used in both inverse geometry and direct geometry interferometric setups. Advantageously, with inverse geometry, manufacturing costs are cheaper because the largest grating G2 at the detector D can be manufactured at a larger pitch as indicated by the bigger gaps in Fig. 2A.

The proposed system recognizes the distinct nature of measurement sensitivity as opposed to magnification effects. Whilst measurement sensitivity induced by the presence of the imaging facilitator IFC is similar to magnification effects in direct geometry far away from the source grating G0, the two effects become markedly different with close to the source grating and the effects are even opposed in inverse geometry. The proposed system can be configured to account for both effects.

As mentioned earlier, the proposed reconstruction with the improved weighted forward model can be used in combination with iterative reconstruction algorithms. In this embodiment, the data processor stage comprises two reconstruction modules in series, one module RECON for the FBP or other analytical algorithm, and downstream therefrom a second reconstructor module RECON' that implements a suitable iterative reconstruction scheme. In this combo-embodiment, the cross-sectional imagery reconstructed by the first reconstructor via FBP or other is used as initial values to the second iterative constructor RECON'. This is because it has been observed that some type of iterative reconstruction algorithms may become trapped in local minima or are otherwise slow to converge to the final result. Performance can be boosted by choosing FBP-computed initial images which are then refined upon during iteration to so achieve quicker convergence. Noise behavior can be improved by using iterative reconstruction algorithms.

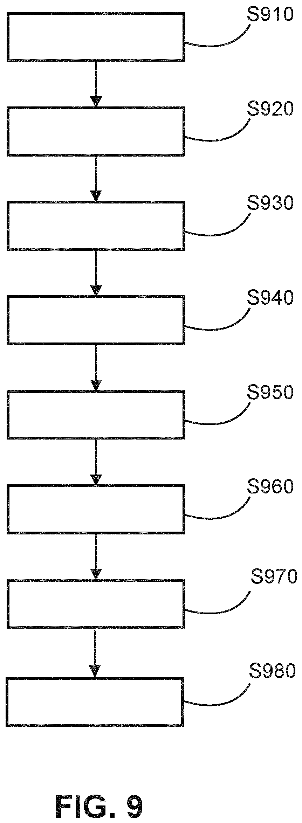

Reference is now made to the flow chart in Fig. 9. The method steps described below may be used to implement the system described above. However, it will be understood that the below method steps may also be understood in its own right and are not necessarily tied to the system described above. The proposed system implements an improved signal processing method in particular for use in tomographic phase contrast and/or dark field image reconstruction.

At step S910 projection data acquired in scan operation by a tomographic imaging apparatus configured for dark field and/or phase contrast imaging is acquired. The apparatus is preferably equipped with an image facilitator structure such as one or more gratings arranged in the examination region/imaging domain.

At step S920 the intensity-based projection data as acquired is converted into phase contrast signal or dark field signal projection data. Step S920 is optional however as some imaging apparatus may be able to natively provide the phase contrast or dark field contrast projection imagery.

At step S930 the dark field or phase contrast data is combined with respect to measurements along complimentary rays as described above to achieve at least partial isotropy. In particular, the along-ray variation of sensitivity is eliminated or at least reduced. For example, measurements of respective complementary rays may be averaged or otherwise combined. Combined projection data/sinogram is obtained in this manner.

At step S940 measurement sensitivity weights $c(\alpha)$ are computed in dependence on ray angle $\alpha$ for the combined projection data. The weights are preferably computed for each $\alpha$ in the angular range covered by the scan operation, but this may not be required in all embodiments. Thus, in order to boost efficiency, in some application scenarios it may suffice to compute the weights merely for a subset of the angular range. The weights may be pre-computed prior to the scan operation. The weights may be computed as per any one of eqs (2), (3) (4) above or similar.

The method may further include some or all of the following data processing steps. Specifically, at step S950 the weights are applied to the combined projection data as obtained per step S930. The order of steps S940, S950 may be reversed, in particular in helical scanning setups. Thanks to step S950 of applying the weights, full isotropy is achieved as now it is also the variation of sensitivity with the ray angle that is eliminated.

At step S960 the so weighted combined projection data is processed by a reconstruction algorithm such as filtered back projection or other reconstruction algorithm of the analytic, direct type. This step S960 results in cross sectional imagery either per section plane or in fully 3D.

At step S970, the reconstructed cross-sectional imagery is output.

At an optional step S980, the output cross-sectional phase contrast or dark field tomographic imagery is supplied as initial data to an iterative reconstruction algorithm to compute improved new versions of the tomographic cross-sectional imagery.

It will be understood that the step S950 of applying the weights may be done prior to reconstruction at S960. Alternatively, thanks to the linearity of the back projection operation, application of weights at S950 may be done jointly with step S960 during the reconstruction operation. The weights may be applied in the filtering step or in the back-projection step.

Preferably, as illustrated above in Figs. 7-8, the combiner step is applied during reconstruction, such as in helical scanning setups.

The components of the signal processing system SPS may be implemented as one or more software modules, run on one or more general-purpose processing units PU such as a workstation associated with the imager IA, or on a server computer associated with a group of imagers. The system SPS may be integrated into the imager's console CS.

Alternatively, some or all components of the SPS may be arranged in hardware such as a suitably programmed microcontroller or microprocessor, such an FPGA (field-programmable-gate-array) or as a hardwired IC chip, an application specific integrated circuitry (ASIC), integrated into the imaging system IA. In a further embodiment still, the system SPS may be implemented in both, partly in software and partly in hardware.

The different components of the SPS may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or any of alphanumeric combination.

## Claims

1. System (SPS) for tomographic reconstruction of phase contrast or dark-field imagery, configured to:

   receive phase contrast, PC, or dark-field, DF, projection data based on measurements along rays through an image domain, the projection data acquired in a scan operation by an imaging apparatus (IA); and
   perform a data processing operation, including a reconstruction operation, to reconstruct the PC or DF imagery in image domain, based on the projection data,

wherein the data processing operation includes a weighting, the weighting based at least on a sensitivity of a mean of measurements along the respective ray.

2. System of claim 1, wherein the said weight per ray depends on fan angle for the respective ray.

3. System of claim 1 or 2, wherein the said mean sensitivity further relates to a measurement along a ray complementary to the said ray.

4. System of any one of previous claims, wherein the weight represents the mean of measurements along the ray, halfway between the two locations of the imaging apparatus's radiation source (XS) on the ray assumed in the scan operation.

5. System of any one of previous claims, wherein the imaging apparatus (IA) includes at least one imaging facilitator component (IFC, G1) operable to facilitate conversion of radiation intensities detectable at a detector (D) of the imaging apparatus into DF of PC signals as the said DF or PC projection data, wherein the image domain is located between the detector (D) and the said at least one imaging facilitator component (IFC, G1).

6. System of claim 5, wherein the imaging facilitator component (IFC, G1) is i) an interferometric grating or ii) a coded aperture structure.

7. System of any one of the previous claims, wherein data processor (DP) implements a tomographic reconstruction algorithm of the filtered-back-projection type.

8. System of claim 7, switchable into two modes, one mode to reconstruct DF imagery and another mode to reconstruct PC imagery using the same back-projection operation.

9. System of any one of the previous claims, the system to further implement a tomographic reconstruction algorithm of the iterative type, to process the reconstructed imagery as initial data to reconstruct second DF or PC imagery.

10. System of any one of claims 7-9, wherein, in a back-projection operation, a contribution of (all) rays from radiation source positions 360° apart from each other are normalized to 1/2.

11. An imaging arrangement (AR), comprising the said system (SPS) of any of the previous claims, and the imaging apparatus (IA), and wherein the imaging apparatus (IA) is preferably of the cone-beam type.

12. Method for tomographic reconstruction of phase contrast or dark-field imagery, comprising:

    receiving (S910) phase contrast, PC, or dark-field, DF, projection data based on measurements along rays through an image domain, the projection data acquired in a scan operation by an imaging apparatus (IA); and
    performing (S960) a data processing operation, including a reconstruction operation, to reconstruct the PC or DF imagery in image domain, based on the projection data,
    wherein the data processing operation includes a weighting (S950), the weighting based at least on a sensitivity of a mean of measurements along the respective ray.

13. Method for supporting tomographic reconstruction of phase contrast or dark-field imagery, computing (S940) weights for use in weighting in a reconstruction algorithm, the weights computed as the mean of measurements per ray angle, halfway between two locations of an imaging apparatus's radiation source on the ray assumable in a scan operation.

14. A computer program element, which, when being executed by at least one processing unit, is adapted to cause the processing unit (PU) to perform the method as per claim 13 or 14.

15. At least one computer readable medium having stored thereon the program element of claim 14.

**FIG. 1**

**FIG. 2**

**FIG. 3**

FIG. 4

**FIG. 5**

**FIG. 6**

**FIG. 7**

**FIG. 8**

FIG. 9

Europäisches
Patentamt
European
Patent Office
Office européen
des brevets

# EUROPEAN SEARCH REPORT

**Application Number**

EP 21 19 7144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2013/171657 A1 (KONINKL PHILIPS NV [NL]; PHILIPS DEUTSCHLAND GMBH [DE]) 21 November 2013 (2013-11-21) * abstract * * page 1 - page 7 * * page 10 - page 13 * ----- | 1-15 | INV. G06T11/00 |
| X | WO 2011/073039 A2 (ZEISS CARL SMT GMBH [DE]; MANN HANS-JUERGEN [DE] ET AL.) 23 June 2011 (2011-06-23) * abstract * * figures 1-3 * * page 5 - page 9 * ----- | 1,12-15 | |
| X | WO 2016/177588 A1 (KONINKLIJKE PHILIPS NV [NL]) 10 November 2016 (2016-11-10) * abstract * * figure 1 * * page 1 * * page 5 - page 8 * * page 10 - page 14 * ----- | 1,12-15 | |
| A | US 2020/305812 A1 (MILLER ERIN A [US] ET AL) 1 October 2020 (2020-10-01) * the whole document * ----- | 1-15 | **TECHNICAL FIELDS SEARCHED (IPC)** G06T |
| A | WO 2016/177903 A1 (KONINKLIJKE PHILIPS NV [NL]) 10 November 2016 (2016-11-10) * the whole document * ----- | 1-15 | |

The present search report has been drawn up for all claims

| Place of search | Date of completion of the search | Examiner |
|---|---|---|
| Munich | 14 March 2022 | Leclercq, Philippe |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 19 7144

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2022

| Patent document cited in search report | | Publication date | Patent family member(s) | | Publication date |
|---|---|---|---|---|---|
| WO 2013171657 | A1 | 21-11-2013 | CN | 104321805 A | 28-01-2015 |
| | | | EP | 2850595 A1 | 25-03-2015 |
| | | | US | 2015124927 A1 | 07-05-2015 |
| | | | WO | 2013171657 A1 | 21-11-2013 |
| WO 2011073039 | A2 | 23-06-2011 | CN | 102754009 A | 24-10-2012 |
| | | | CN | 105511065 A | 20-04-2016 |
| | | | EP | 2513697 A2 | 24-10-2012 |
| | | | JP | 5756121 B2 | 29-07-2015 |
| | | | JP | 6132319 B2 | 24-05-2017 |
| | | | JP | 2013513957 A | 22-04-2013 |
| | | | JP | 2015158694 A | 03-09-2015 |
| | | | US | 2012274917 A1 | 01-11-2012 |
| | | | WO | 2011073039 A2 | 23-06-2011 |
| WO 2016177588 | A1 | 10-11-2016 | CN | 106793986 A | 31-05-2017 |
| | | | EP | 3134000 A1 | 01-03-2017 |
| | | | JP | 6214819 B1 | 18-10-2017 |
| | | | JP | 2017532986 A | 09-11-2017 |
| | | | US | 2018228455 A1 | 16-08-2018 |
| | | | WO | 2016177588 A1 | 10-11-2016 |
| US 2020305812 | A1 | 01-10-2020 | AU | 2020244753 A1 | 14-10-2021 |
| | | | CA | 3133306 A1 | 01-10-2020 |
| | | | EP | 3948240 A1 | 09-02-2022 |
| | | | US | 2020305812 A1 | 01-10-2020 |
| | | | WO | 2020198018 A1 | 01-10-2020 |
| WO 2016177903 | A1 | 10-11-2016 | CN | 107567640 A | 09-01-2018 |
| | | | EP | 3292539 A1 | 14-03-2018 |
| | | | JP | 6805173 B2 | 23-12-2020 |
| | | | JP | 2018519872 A | 26-07-2018 |
| | | | US | 2018137618 A1 | 17-05-2018 |
| | | | WO | 2016177903 A1 | 10-11-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013171657 A

### Non-patent literature cited in the description

- **A OLIVO et al.** A coded-aperture technique allowing x-ray phase contrast imaging with conventional sources. *Applied Physics Letters,* 2007, vol. 91, 074106
- **F PFEIFFER et al.** X-ray dark-field and phase-contrast imaging using a grating interferometer. *JOURNAL OF APPLIED PHYSICS,* 2009, vol. 105, 102006
- **BY I ZANETTE et al.** Tri-modal low-dose X-ray tomography. *PNAS,* 2012, vol. 109 (26), 10199-10204
- **M VON TEUFFENBACH et al.** Grating-based phase-contrast and dark-field computed tomography: a single-shot method. *Sci Rep,* 2017, vol. 7, 7476
- **DONATH et al.** Inverse geometry for grating-based x-ray phase-contrast imaging. *JOURNAL OF APPLIED PHYSICS,* 2009, vol. 106, 054703
- **L. A. FELDKAMP et al.** Practical cone-beam algorithm. *Journal of the Optical Society of America A,* 1984, vol. 1 (6), 612-619
- Direct Fan-Beam Reconstruction Algorithm via Filtered Backprojection for Differential Phase-Contrast Computed Tomography. **Z QI ; G CHEN.** X-Ray Optics and Instrumentation. Hindawi Publishing Corporation, vol. 2008, 8
- **SHECHTER et al.** High-Resolution Images of Cone Beam Collimated CT Scans. *IEEE Transactions on Nuclear Science 52,* 2005, vol. 247 (1